# EUROPEAN PATENT SPECIFICATION

(11) **EP 0 698 472 B1**
(45) Date of publication and mention of the grant of the patent: **10.11.1999**
(21) Application number: 95202115.2
(22) Date of filing: 02.08.1995
(51) Int. Cl.: B29C 63/14, B65H 19/28, B29C 53/62, B65H 65/00

(54) **Device and method for winding**
Vorrichtung und Verfahren zum Aufwickeln
Dispositif et procédé d'enroulement

(30) Priority: 23.08.1994 BE 9400761
(43) Date of publication of application: 28.02.1996
(73) Proprietor: POLVA PIPELIFE B.V., 1601 MA Enkhuizen (NL)
(72) Inventor: De Bruille, Thierry, B-1330 Rixensart (BE); Lannoy, Wolfgang, B-1350 Wavre (BE)
(74) Representative: de Bruijn, Leendert C.

(56) References cited:
- EP-A- 0 021 049
- DE-A- 3 023 142
- US-A- 3 642 221

## Description

La présente invention concerne un dispositif et un procédé pour apposer par enroulement hélicoïdal au moins une bande autour d'un corps de révolution, comprenant au moins un système de distribution de bande, ladite bande comprenant une amorce apte à adhérer au corps de révolution lorsqu'elle y est appliquée.

Un dispositif de ce genre est par exemple utilisé, lors de la fabrication de tuyaux renforcés en matière plastique, pour enrouler hélicoïdalement une ou plusieurs bandes de renforcement autour de l'ébauche d'un tuyau, ci-après qualifiée de mandrin. Un tel dispositif comprend par exemple un plateau supportant le système de distribution de la ou des bandes qui est entrainé en rotation autour de l'axe longitudinal du mandrin, ce dernier étant en translation axiale à travers le dispositif. Alternativement, le plateau supportant le système de distribution de la ou des bandes peut ne pas être en rotation, le mandrin étant lui-même en rotation autour de son axe longitudinal. De plus, au lieu de déplacer le mandrin à travers le dispositif d'enroulement, ce dernier peut aussi être déplacé le long de l'axe longitudinal du mandrin. La conjonction du mouvement de rotation et du mouvement de translation selon l'axe du mandrin détermine le pas de son bandage hélicoïdal.

Pour amorcer l'opération d'enroulement d'une bande, on peut l'appliquer manuellement, sur une longueur suffisante, autour du mandrin, et entraîner ensuite progressivement, soit le système de distribution, soit le mandrin, en rotation et en translation. Cette façon d'amorcer l'opération d'enroulement a en premier lieu le désavantage de prendre beaucoup de temps. De plus, le pas d'enroulement de la bande n'est pas constant pendant la phase de démarrage, aussi longtemps que la vitesse de rotation et la vitesse de translation n'ont pas atteint leur valeur de régime. Enfin, une longueur importante de tuyau autour duquel la bande est mal enroulée doit être éliminée lors de chaque amorçage. Lorsqu'on applique simultanément plusieurs bandes sur un mandrin, leur positionnement relatif ne peut guère être assuré avec une précision suffisante. Enfin, il y a toujours le risque que l'amorce de la bande se décolle lors du démarrage du mouvement de rotation/translation. Dans ce contexte, il convient notamment de remarquer que l'effort de traction exercé sur la bande est justement le plus élevé lors du démarrage du mouvement de rotation. En effet, la mise en rotation des bobines du système de distribution de la bande exerce une force de traction plus importante sur la bande que le maintien en rotation de ces bobines.

On peut aussi munir le dispositif d'enroulement d'un rouleau d'application qui presse la bande contre le mandrin. Dans ce cas l'amorçage se fait en disposant manuellement la bande, toujours en l'absence de tout mouvement de rotation et de translation, entre ce rouleau d'application et le mandrin. Mis à part que ce rouleau d'application réduit quelque peu le risque d'un décollage de l'amorce lors de la phase de démarrage du mouvement de rotation, cette solution ne permet guère de remédier aux autres inconvénients susmentionnés. De plus, il peut être souhaitable de travailler en régime sans rouleau d'application, car ce dernier peut par exemple influencer défavorablement l'adhérence de la bande sur le mandrin.

Le document DE-A-30 23 142 montre un dispostif d'enroulement avec un rouleau d'application et deux rouleaux fous agencés en amont dudit rouleau d'application de façon à pouvoir pincer l'amorce de la bande à l'écart du mandrin.

Le but de la présente invention est de fournir un dispositif d'enroulement hélicoïdal d'une bande autour d'un corps de révolution, qui permette de répondre aux inconvénients d'amorçage décrits plus haut.

L'invention concerne dès lors un dispositif pour apposer par enroulement hélicoïdal au moins une bande autour d'un corps de révolution, comprenant au moins un système de distribution de bande, ladite bande comprenant une amorce apte à adhérer audit corps de révolution lorsqu'elle est appliquée sur ce dernier, et un dispositif d'amorçage de l'opération d'enroulement associé à chaque système de distribution de bande et comprenant
- deux rouleaux fous agencés de façon à pouvoir pincer l'amorce de la bande sortant dudit système de distribution dans une position de pinçage à l'écart dudit corps de révolution, et
- des moyens pour déplacer les deux rouleaux fous pinçant l'amorce de la bande de la position de pinçage vers une position d'amorçage, dans laquelle celui des deux rouleaux qui est placé en première place, dans le sens d'enroulement de la bande autour dudit corps de révolution, est appliqué contre ledit corps de révolution, et dans laquelle ledit système de distribution de la bande et/ou le corps de révolution sont entraînés en rotation autour de l'axe longitudinal dudit corps de révolution et/ou en translation le long de cet axe.

Avec le dispositif selon l'invention, il suffit, pour amorcer l'enroulement de la bande autour du corps de révolution, de pincer l'amorce de la bande entre les deux rouleaux fous, de déclencher le mouvement de rotation et de translation, et d'appliquer ensuite le premier rouleau, c'est-à-dire celui placé en première place dans le sens d'enroulement de la bande, sur le corps de révolution, de sorte que ce rouleau soit entrainé en rotation. La bande est alors tirée hors du système de distribution par les deux rouleaux fous en rotation, et est guidée par le premier rouleau entre celui-ci et le corps de révolution, sur lequel elle est appliquée par le premier rouleau. Le dispositif selon l'invention permet d'automatiser l'opération d'amorçage de l'enroulement et de gagner ainsi beaucoup de temps. De plus, le pas de l'enroulement hélicoïdal est rigoureusement constant, même pendant la phase d'amorçage. En effet, les mouvements de rotation et de translation peuvent déjà avoir atteint leur vitesse de régime au début de l'opération d'amorçage. Si plusieurs bandes sont apposées simultanément sur le corps de révolution avec un certain décalage angulaire, l'utilisation d'un dispositif d'amorçage selon l'invention pour chacune des bandes permet en outre de parfaitement coordonner leur amorçage dans le temps et dans l'espace. Il en résulte que l'agencement relatif des bandes multiples est assuré dès l'amorçage avec grande précision et est parfaitement reproductible. On notera encore que le dispositif selon l'invention réduit quasiment à zéro le risque d'arrachage de l'amorce. En effet, ce sont les deux rouleaux qui exercent la traction sur la bande pour la tirer en-dehors de son système de distribution. La portion de bande enroulée autour du mandrin est libre de toute tension de traction.

Les axes des deux rouleaux fous du dispositif d'amorçage sont en pratique parallèles à l'axe du mandrin.

Les deux rouleaux fous du dispositif d'amorçage sont de préférence montés de façon à ce qu'ils puissent être écartés pour définir un libre passage pour la bande sortant du système de distribution. Ainsi, une fois l'opération d'amorçage terminée, les deux rouleaux fous peuvent être ramenés dans leur première position, sans interférer avec la bande s'enroulant autour du corps de révolution.

Afin d'améliorer aussi bien le pinçage de la bande entre les deux rouleaux que le pressage de la bande sur le corps de révolution, le premier rouleau fou du dispositif d'amorçage qui est appliqué contre le corps de révolution est avantageusement un rouleau à surface de roulement déformable élastiquement; par exemple un rouleau muni d'une bande de roulement en caoutchouc. Le deuxième rouleau fou, c'est-à-dire celui qui est placé en deuxième place dans le sens d'enroulement de la bande autour du corps de révolution, a de préférence une surface de roulement sensiblement rigide. Un rouleau à surface de roulement métallique s'est avéré avantageux, en particulier lorsqu'une amorce adhésive est utilisée.

Il sera encore noté que le premier rouleau fou qui est appliqué contre le corps de révolution, a de préférence un diamètre sensiblement plus grand que le deuxième rouleau fou.

Avantageusement, les deux rouleaux fous ont une largeur supérieure à celle de la bande à enrouler.

Dans une exécution préférentielle, le dispositif d'amorçage comprend un support déplaçable. Ce dernier est de manière avantageuse déplaçable en direction du corps de révolution. Le support du dispositif d'amorçage permettant d'appliquer le premier rouleau fou contre le corps de révolution peut notamment être déplaçable dans des coulisses perpendiculairement à l'axe du tuyau, de manière à se déplacer en translation, ou encore autour d'un axe parallèle à celui du tuyau, de manière à pouvoir exécuter une rotation. Le deuxième rouleau fou, est de préférence fixé rigidement sur le support. Le premier rouleau fou qui est destiné à être appliqué contre le corps de révolution, est de préférence déplaçable sur le support en direction du deuxième rouleau fou. Ce dernier sert alors de butée au premier rouleau fou déplaçable sur le support. A titre de variante, le premier rouleau fou peut être fixé rigidement sur le support, le second rouleau fou étant alors déplaçable vers le premier rouleau fou pour pincer l'amorce de la bande. On peut aussi prévoir un mécanisme plus complexe dans lequel les deux rouleaux fous sont tous deux déplaçables pour pincer l'amorce.

Le support du dispositif d'amorçage est de préférence déplaçable par un premier vérin pneumatique. Le rouleau fou déplaçable sur le support est de préférence porté par un deuxième vérin pneumatique. Ces vérins pneumatiques peuvent évidemment être remplacés par des moyens équivalents tels que notamment un vérin hydraulique ou un système à vis ou à crémaillère entraîné par un moteur électrique.

Il sera encore noté que l'agencement des deux rouleaux fous pinçant l'amorce de la bande dans la position d'amorçage est de préférence fixé de façon à ce que la distance angulaire α entre le point de tangence P₁ (défini comme étant le point du corps de révolution à partir duquel la bande s'enroulerait librement sur le corps de révolution en l'absence du dispositif d'amorçage), et le point de contact P₀ du premier rouleau fou avec le corps de révolution, soit comprise entre 0 et 90°, de préférence entre 30° et 50°. Cet angle α influence notamment l'adhérence initiale de l'extrémité libre de l'amorce sur le corps de révolution.

Dans la position d'amorçage les deux rouleaux fous pinçant l'amorce de la bande sont de préférence agencés de façon à ce que cette amorce soit sensiblement contenue dans un plan tangent audit corps de révolution.

Les deux rouleaux fous sont de préférence agencés de façon à ce qu'en position de pinçage, dans le plan perpendiculaire à l'axe du mandrin, la droite perpendiculaire à celle joignant leurs axes et passant par leur point de contact, qui coupe la droite joignant l'axe du mandrin et le point de tangence P₁, la coupe en un point situé entre cet axe et ce point de tangence.

Selon une variante avantageuse, le dispositif selon l'invention permet d'appliquer simultanément plusieurs bandes autour d'un corps de révolution. A cette fin, il comprend plusieurs systèmes de distribution de bande, chacun muni d'un dispositif d'amorçage tel que décrit ci-dessus. Ces systèmes peuvent en particulier être entraînés en rotation dans un même sens ou dans des sens inverses.

De manière préférée, le dispositif de l'invention permet d'enrouler deux bandes superposées en sens inverses autour d'un corps de révolution, et comprend à cette fin deux systèmes de distribution.

Reste enfin à signaler que le dispositif selon l'invention comprend de préférence au moins un plateau de support qui porte au moins un système de distribution. Ce plateau de support peut être entraîné en rotation autour de l'axe du corps de révolution mais pas en translation le long de cet axe, tandis que le corps de révolution peut être entraîné en translation le long de son axe mais pas en rotation autour de cet axe. Alternativement, le plateau de support peut être entraîné en translation le long du corps de révolution mais pas en rotation autour de son axe. Dans ce cas le corps de révolution est entraîné en rotation autour de son axe mais pas en translation le long de cet axe. Ne sont pas non plus à exclure de l'invention les cas dans lesquels le plateau de support et le corps de révolution sont entraînés tous les deux en rotation et en translation, de façon à avoir une vitesse relative l'un par rapport à l'autre. Plusieurs plateaux, espacés le long de l'axe du corps de révolution, peuvent éventuellement être utilisés conjointement. En particulier, il est avantageux d'utiliser 2 plateaux tournant dans des sens inverses, afin de renforcer au moins doublement le corps de révolution de façon symétrique.

Le corps de révolution est souvent un mandrin cylindrique en vue de la fabrication d'un tuyau renforcé. Il peut être constitué d'un ou plusieurs matériaux classiquement retenus par l'homme du métier à cet effet. De préférence, il est à base d'une ou plusieurs matières plastiques, en particulier d'un ou plusieurs polymères thermoplastiques.

A titre de polymères thermoplastiques, on peut notamment citer les polyoléfines, dont par exemple le polyéthylène (PE), les polymères du chlorure de vinyle, dont par exemple le poly(chlorure de vinyle) (PVC), ainsi que les polymères dérivés du fluorure de vinylidène, dont par exemple le poly(fluorure de vinylidène) (PVDF). De bons résultats ont été obtenus à partir de polyoléfines, en particulier à partir de PE. Comme PE, on préfère utiliser le polyéthylène de moyenne densité (MDPE) ou de haute densité (HDPE). On préfère tout particulièrement le polyéthylène de haute densité (HDPE).

Le mandrin peut comprendre une ou plusieurs couches. En particulier, il peut s'agir d'un mandrin composite à base de matière plastique, dont au moins la couche extérieure soit essentiellement constituée de matière plastique telle que définie ci-avant.

On peut ajouter aux matières plastiques tout additif connu, par exemple un ou plusieurs pigments, adjuvants de mise en oeuvre, antioxydants, stabilisants, charges minérales, etc.

Reste à noter que selon la présente invention le terme "bande" désigne de façon générale un produit plus long que large qui peut être apposé par enroulement hélicoïdal autour d'un corps. Il est explicitement précisé que le terme "bande" englobe notamment des fibres isolées ou des faisceaux de fibres.

Une variante avantageuse de l'invention concerne un dispositif tel que décrit ci-dessus, dans lequel la bande est constituée d'un faisceau de fibres de renforcement. En particulier, la bande est constituée d'un faisceau de fibres de renforcement continues préalablement imprégnées par une matière plastique, que l'on qualifie couramment de "COFIT" (continuous fiber impregnated by a thermoplastic). Une telle bande peut notamment être obtenue en faisant passer un faisceau de fibres de renforcement dans un bain de matière plastique en fusion, ou en mettant en oeuvre un faisceau co-mêlé de fibres de renforcement et de fibres de matière plastique. Il peut encore être obtenu en mettant en oeuvre un faisceau de fibres de renforcement entre lesquelles a été dispersée une matière plastique en poudre. Dans ces deux derniers modes de mise en oeuvre, il est naturellement indispensable de chauffer le faisceau, avant son enroulement autour d'un corps de révolution, de manière à ce que la matière plastique fonde et imprègne de manière homogène les fibres de renforcement.

Les fibres utilisées dans le faisceau de renforcement peuvent être de tout type, par exemple des fibres de carbone, de verre, de métal, ou d'aramide. On préfère utiliser des fibres de verre. Quelle que soit leur nature, ces fibres sont continues, ou du moins d'une très grande longueur, par exemple de l'ordre de plusieurs centaines de mètres. Lorsque le faisceau de fibres de renforcement est imprégné par une matière plastique, on utilise de préférence des quantités respectives de matière plastique et de fibres de renforcement telles que le COFIT ainsi constitué contienne de l'ordre de plusieurs centaines de fibres par mm² de section. Comme matière plastique, on peut retenir une matière plastique telle que définie ci-avant. La compatibilité des fibres de renforcement et de la matière plastique peut être accrue par un traitement superficiel adéquat des fibres, par exemple au moyen d'un composé de la famille des organosilanes dans le cas de fibres de verre, ou encore par l'incorporation à la matière plastique d'un compatibilisant adéquat.

Lorsqu'une bande de renforcement est unprégnée de matière plastique, il est préférable, juste avant qu'elle n'entre en contact avec le corps de révolution, de la préchauffer à une température supérieure à la température de ramollissement de sa matière plastique constitutive, de manière à améliorer l'adhérence de la bande au corps de révolution. A cette fin, au moins un système de distribution de la bande comprend avantageusement un dispositif de chauffage de celle-ci, par exemple une ou plusieurs résistances électriques. Lorsque le dispositif selon l'invention comprend plusieurs systèmes de distribution d'une bande, chaque système de distribution comprend préférentiellement un dispositif de chauffage de la bande. Lorsque la surface extérieure du corps de révolution est constituée de ou comprend une matière thermoplastique, il est également avantageux de la préchauffer avant de procéder à l'enroulement d'une ou de plusieurs bandes.

En vue de faciliter l'amorçage de cette opération d'enroulement, comme exposé précédemment, l'extrémité de la bande est avantageusement munie d'un adhésif. De préférence, cet adhésif n'est apposé que sur la face de la bande qui doit être dirigée vers le corps de révolution, afin d'éviter tout collage intempestif de la bande au rouleau fou destiné à l'appliquer sur le corps de révolution. Cet adhésif est généralement apposé sur une faible longueur de l'extrémité de la bande, par exemple sur 10 à 30 mm, selon les dimensions du corps de révolution.

Outre la bande enroulée hélicoïdalement, le corps de révolution peut encore être revêtu extérieurement d'au moins une couche de finition, afin notamment de protéger ladite bande et d'améliorer la précision dimensionnelle extérieure du corps de révolution.

La présente invention concerne également, sous un autre aspect, un procédé pour l'apposition par enroulement hélicoïdal d'au moins une bande autour d'un corps de révolution, qui se caractérise en ce qu'il met en oeuvre un dispositif tel que défini ci-dessus.

D'autres avantages et caractéristiques de l'invention ressortiront de manière non limitative de la description détaillée d'une exécution préférentielle du dispositif proposé par l'invention, illustrée par les figures annexées, dans lesquelles :
- la Figure 1 représente une vue schématique d'un dispositif pour apposer par enroulement hélicoïdal une bande autour d'un corps de révolution, comprenant un dispositif d'amorçage selon l'invention; le dispositif d'amorçage étant dans une position d'attente;
- la Figure 2 représente le dispositif en position de pinçage;
- la Figure 3 représente le dispositif en position d'amorçage;
- la Figure 4 représente le dispositif en position de régime, la bande s'enroulant librement autour du corps de révolution.

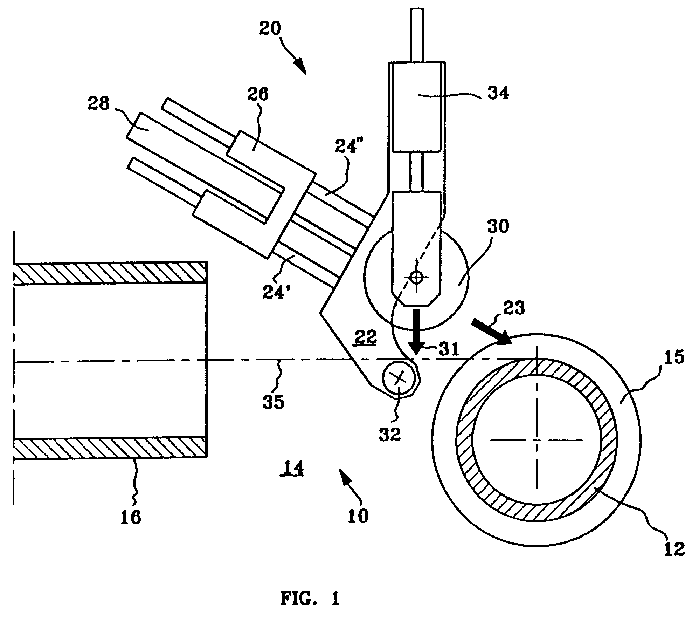

On se réfère d'abord à la Figure 1, dans laquelle la référence 10 repère globalement un dispositif selon l'invention. Ce dernier est utilisé pour apposer une bande autour d'un corps de révolution 12, qui est représenté schématiquement par une section transversale à son axe longitudinal. Il sera noté que cet axe longitudinal du corps de révolution est perpendiculaire au plan de la figure.

Le dispositif 10 comprend un plateau annulaire 14, représenté schématiquement par le plan de la Figure. Ce plateau 14 peut être entraîné en rotation autour de l'axe longitudinal du corps de révolution 12. Ce dernier peut lui-même être entraîné en translation parallèlement à son axe longitudinal, c'est-à-dire perpendiculairement au plan du dessin, au travers de l'orifice 15 du plateau annulaire 14. Le plateau 14 porte un système classique de distribution de la bande, qui est représenté schématiquement sur les figures par un canal de distribution 16. Ce système de distribution comprend une ou plusieurs bobines (non montrées). Sur chacune d'entre elles est enroulée une bande, qu'un dispositif de chauffage permet de chauffer superficiellement à une température légèrement supérieure à la température de fusion de la matière thermoplastique qui imprègne les fibres de renforcement.

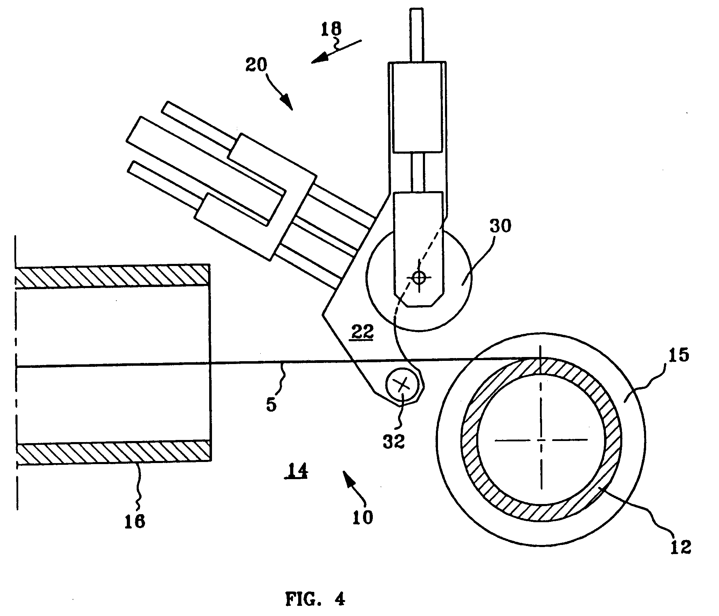

Sur la Figure 4 le dispositif 10 est montré lors de l'enroulement de régime. Le plateau 14 tourne dans le sens de la flèche 18 autour de l'axe longitudinal du corps de révolution 12, autour duquel s'enroule une bande de renforcement 5, sortant du canal de distribution 16. Le sens d'enroulement de la bande correspond par conséquent au sens de rotation du plateau 14. Comme le corps de révolution 12 subit simultanément un mouvement de translation axiale, la bande 5 est apposée hélicoïdalement autour du corps de révolution 12. Le pas de l'hélice est déterminé par le rapport entre la vitesse de rotation du plateau 14 et la vitesse de translation du corps de révolution 12.

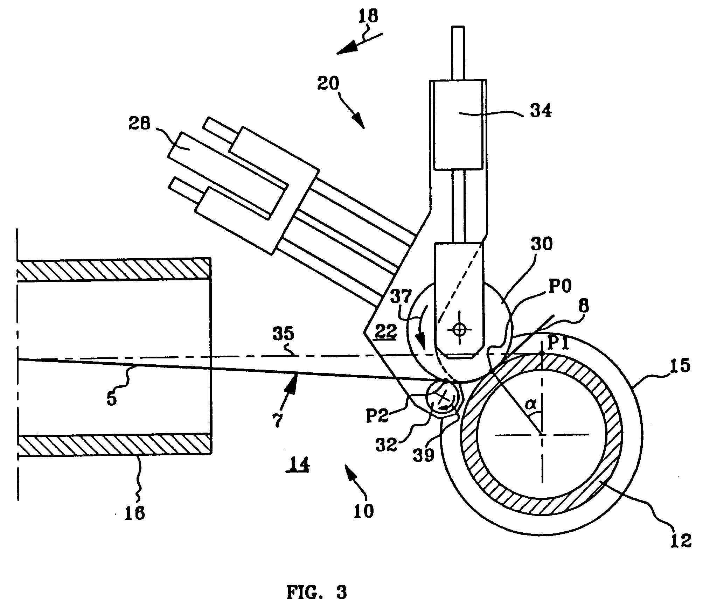

Avant d'arriver à un enroulement de régime, représenté sur la Figure 4, il faut évidemment d'abord assurer l'amorçage de l'enroulement de la bande autour du corps de révolution 12. En d'autres termes, il faut assurer qu'une amorce 7 (Figure 3) de la bande 5 soit appliquée autour du corps de révolution 12. Dans le dispositif 10 on a prévu à cet effet un dispositif d'amorçage spécial qui est globalement repéré par la référence 20.

Se référant de nouveau à la Figure 1, on va d'abord repérer les principaux éléments du dispositif d'amorçage 20, avant de décrire en détail son fonctionnement à l'aide de la suite des Figures 1 à 4.

La structure de base du dispositif d'amorçage 20 comprend un support 22 qui peut être déplacé dans le plan de la figure en direction du corps de révolution 12 (cf. flèche 23). A cette fin le support 22 comprend deux tiges de guidage 24' et 24'' qui sont guidées dans des coulisses 26 fixées rigidement sur le plateau 14. Un vérin pneumatique 28, ou un moyen d'entraînement équivalent, assure un mouvement de translation du support 22 parallèlement au plateau 14. Sur le support 22 sont montés deux rouleaux fous 30 et 32, qui peuvent tourner chacun librement autour de leur axe, perpendiculaire au plan du dessin. L'axe du rouleau fou 32 est fixé rigidement sur ce support 22. Le rouleau fou 30, par contre, est déplaçable sur le support 22 dans la direction de la flèche 31. A cette fin il est par exemple supporté par un vérin pneumatique 34 fixé lui-même rigidement sur le support 22. Il sera encore noté que le rouleau 32 est un rouleau à surface de roulement métallique. Le rouleau 30 a un diamètre sensiblement plus grand que le rouleau 32 et possède une surface de roulement déformable élastiquement, par exemple une surface de roulement en caoutchouc.

Sur la Figure 1, le dispositif 10 est en position d'attente, c'est-à-dire que le plateau 14 est à l'arrêt et que le support 22 se trouve dans une première position dans laquelle les deux rouleaux fous 30 et 32 sont à l'écart du corps de révolution 12. Dans cette première position le rouleau 32 se situe légèrement endessous du plan 35 dans lequel défilera la bande 5 en fonctionnement de régime (cf. Figure 4). Le rouleau 30 est en position retirée, dans laquelle il est situé au-dessus du plan 35. Dans cette position, qui correspond aussi à celle de la Figure 4, les deux rouleaux fous 30 et 32 définissent un libre passage pour la bande 5.

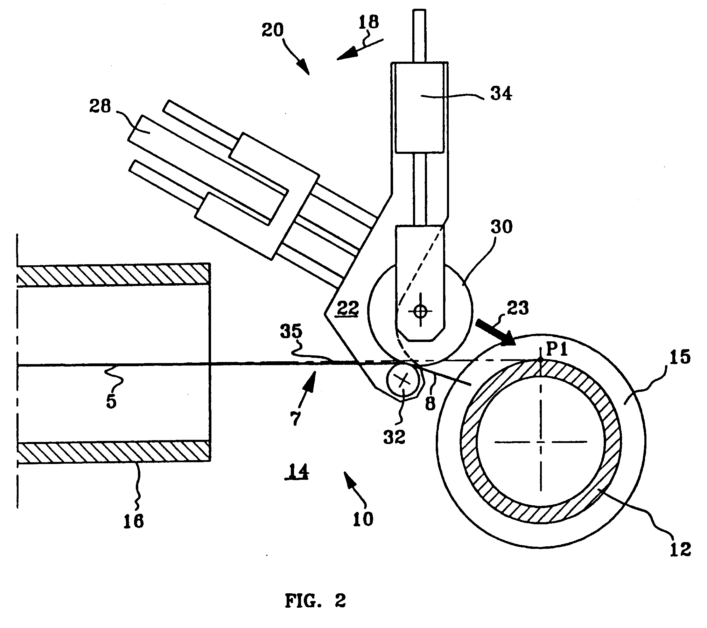

Sur la Figure 2, le dispositif 10 est représenté en position de pinçage. Pour arriver dans cet état, les opérations suivantes ont été effectuées. Le plateau 14 étant à l'arrêt, et le support 22 toujours comme selon la Figure 1, l'opérateur a introduit une amorce 7 de la bande 5 entre les deux rouleaux fous 30 et 32. Ensuite, le vérin 34 a été actionné pour pincer cette amorce 7 entre les deux rouleaux fous 30 et 32. Le rouleau fou 32 joue lors du pincement de l'amorce 7 le rôle d'une butée pour le rouleau fou 30. La surface de roulement de ce dernier se déforme légèrement ce qui rend notamment le pincement de l'amorce 7 plus efficace. Dans la position de pinçage, l'amorce 7 pincée entre les deux rouleaux 30 et 32 se trouve encore sensiblement dans le plan tangent 35 qui, on l'a vu plus haut, est le plan de défilement de régime de la bande 5.

Une fois le pinçage de l'amorce par les deux rouleaux 30 et 32 réalisé, le plateau 14 a été mis en rotation dans le sens de la flèche 18 et le corps de révolution 12 a été mis en translation le long de son axe. Lorsque les deux mouvements ont atteint leur vitesse de régime, le vérin 28 a été actionné pour déplacer le support 22 de sa première position dans la direction de la flèche 23 vers une position d'amorçage, dans laquelle il est représenté sur la Figure 3. En passant de la position de pinçage selon la Figure 2 dans la position d'amorçage, représentée sur la Figure 3, les deux rouleaux 30 et 32 pinçant l'amorce 7 exercent une traction sur la bande 5 et entraînent celle-ci en direction du corps de révolution 12. A un moment donné l'extrémité libre 8 de l'amorce 7 entre en contact avec le corps de révolution 12. A ce moment se produit une première adhérence entre l'extrémité libre 8 de l'amorce 7 adhésive et le corps de révolution 12. Cette adhérence initiale assure que l'extrémité libre 8 de l'amorce 7 est tirée en-dessous du rouleau 30, avant que n'entrent en contact le rouleau 30 et le corps de révolution 12. Ainsi ladite amorce 7 est pincée entre le rouleau 30 et la surface du corps de révolution 12 lorsque le rouleau 30 entre en contact avec cette surface au point de contact désigné "P₀" sur les figures. Sur la Figure 3 on voit en effet que dans la position d'amorçage, le rouleau 30 est appliqué contre le corps de révolution 12 par le vérin 28. Dans un repère solidaire du plateau 14, le point de contact P₀ est en avance, dans le sens d'enroulement, d'un angle α (supérieur à 0°) par rapport au point de tangence P₁ défini par le plan 35.

Dès que le rouleau fou 30 entre en contact avec le corps de révolution 12, il est entraîné en rotation dans le sens de la flèche 37. De plus, il entraîne lui-même en rotation le rouleau fou 32, qui n'est pas en contact avec le corps de révolution 12, dans le sens de la flèche 39. Il s'ensuit que les deux rouleaux 30 et 32 extraient la bande 5 du dispositif de distribution 16 avec une vitesse qui correspond sensiblement à la vitesse de dépose de la bande 5 sur le corps de révolution 12. L'amorce 7 qui est appliquée par le rouleau 30 sur le corps de révolution 12 n'est par conséquent soumise à aucun effort de traction qui pourrait la décoller ou la déplacer sur la surface du corps de révolution 12. L'effort de traction nécessaire pour extraire la bande 5 du système de distribution 16 est essentiellement délivré par les deux rouleaux 30 et 32 en amont du point de contact P₀. Par conséquent, en aval du point de contact P₂ entre les deux rouleaux 30 et 32, l'amorce 7 est libre de tensions longitudinales et est guidée par la surface de roulement du rouleau 30 jusqu'au point P₀, où elle est pressée radialement contre la surface du corps de révolution 12.

Lorsqu'une longueur suffisante de la bande 5 est enroulée autour du corps de révolution 12, le vérin 34 est actionné pour retirer le rouleau 30. La bande 5 est libérée et se place dans le plan 35. Ensuite le vérin 28 est actionné pour reculer le support 22 dans sa première position. Le dispositif 10 se trouve maintenant en position de régime dans l'état représenté sur la Figure 4. La bande 5 s'enroule, comme décrit plus haut, librement autour du corps de révolution 12. Les deux rouleaux 30 et 32 sont dans cette position à l'écart de la trajectoire de la bande 5 dans le plan 35.

Pendant toute cette phase d'amorçage ainsi que pendant l'enroulement proprement dit, comme exposé précédemment, il peut être avantageux de préchauffer la bande de renforcement (5) et/ou la surface extérieure du corps de révolution (12) avant leur entrée en contact. Le préchauffage de la bande peut notamment être réalisé en disposant des résistances électriques dans le canal de distribution (16).

Il est possible d'enrouler simultanément plusieurs bandes 5 avec un déphasage angulaire autour du corps de révolution 12. A cette fin plusieurs systèmes de distribution 16 peuvent être agencés sur le plateau 14 autour du corps de révolution 12. A chacun de ces systèmes de distribution 16 est alors associé un dispositif d'amorçage 20, tel que décrit plus haut. Les amorces des bandes sont pincées par ces dispositifs d'amorçage, et les mouvements de rotation et de translation sont déclenchés. Ensuite, les différents dispositifs d'amorçage appliquent leur amorce simultanément contre le corps de révolution, comme décrit plus haut. Il sera apprécié qu'on peut de cette façon parfaitement synchroniser l'amorçage de l'enroulement de plusieurs bandes et assurer leur positionnement relatif avec grande précision.

Au lieu de faire tourner le plateau 14 dans le sens de la flèche 18, le corps de révolution 12 pourrait aussi être entraîné dans le sens inverse de la flèche 18. Dans ce cas le sens d'enroulement serait toujours le sens défini par la flèche 18. De même, au lieu d'entraîner le corps de révolution 12 en translation le long de son axe, il serait également envisageable d'entraîner le plateau 14 en translation le long du corps de révolution 12. Il sera noté que dans ces deux cas le dispositif d'amorçage 20 n'a pas besoin d'être modifié.

Si par contre le sens d'enroulement de la bande 5 autour du corps de révolution 12 est changé, il faut inverser la position des deux rouleaux fous 30 et 32. En effet, le rouleau 30 qui est appliqué contre le corps de révolution 12 doit toujours être placé en première place, dans le sens d'enroulement de la bande autour du corps de révolution 12.

## Claims

1. Device for laying at least one band (5) around a body of revolution (12) by helical winding, comprising at least one system (16) for dispensing the band (5), the said band (5) comprising a leader (7) capable of adhering to the said body of revolution (12) when it is applied to the latter, and a device (20) for triggering the winding operation, the said triggering device being associated with each system (16) for dispensing the band (5) and comprising
- two idling rollers (30 and 32) arranged to be capable of nipping the leader (7) of the band (5) emerging from the said dispensing system (16), in a nipping position apart from the said body of revolution (12), and
- means for displacing the two idling rollers (30 and 32) nipping the leader (7) of the band (5) from the nipping position towards a triggering position, in which that of the two rollers which is located in the first place, in the direction of winding of the band (5) around the said body of revolution (12), is applied against the said body of revolution (12) and in which the said system (16) for dispensing the band (5) and/or the body of revolution (12) are driven in rotation about the longitudinal axis of the said body of revolution (12) and/or in translational motion along this axis.

2. Device according to Claim 1, characterized, furthermore, in that the two idling rollers (30 and 32) of the triggering device (20) are mounted in such a way that they can be set apart in order to define free passage for the band (5) emerging from the dispensing system (16).

3. Device according to Claim 1 or 2, characterized, furthermore, in that that idling roller (30) of the triggering device (20) which is applied against the body of revolution (12) is a roller having an elastically deformable rolling surface.

4. Device according to any one of Claims 1 to 3, characterized, furthermore, in that the second idling roller (32) has a substantially rigid rolling surface.

5. Device according to Claim 3 or 4, characterized, furthermore, in that the idling roller (30) which is applied against the said body of revolution (12) has a diameter substantially larger than that of the second idling roller (32) of the said triggering device (20).

6. Device according to any one of Claims 1 to 5, characterized, furthermore,
- in that the triggering device (20) comprises a support (22) displaceable in the direction of the body of revolution (12),
- in that the second idling roller (32) is fastened rigidly to the said support (22), and
- in that the idling roller (30), which is intended to be applied against the body of revolution (12), is displaceable on the said support (22) in the direction of the second idling roller (32) the latter serving as an abutment for the idling roller (30) displaceable on the said support (22).

7. Device according to Claim 6, characterized, furthermore, in that the support (22) is displaceable by means of a first pneumatic jack (28).

8. Device according to Claim 6 or 7, characterized, furthermore, in that the idling roller (30) displaceable on the support (22) is carried by a second pneumatic jack (34).

9. Device according to any one of Claims 1 to 8, characterized, furthermore, in that, in the triggering position, the two idling rollers (30 and 32) nipping the feeder (7) of the band (5) are arranged in such a way that the angular distance α (5) between the tangent point (P₁), from which the band (5) would be wound freely on the body of revolution (12) in the absence of the triggering device, and the point of contact (P₀) of the first idling roller (30) with the body of revolution (12) is between 0° and 90°.

10. Device according to any one of Claims 1 to 9, characterized, furthermore, in that, in the triggering position, the two idling rollers (30 and 32) nipping the leader (7) of the band (5) are arranged in such a way that this leader (7) is substantially contained in a plane (35) tangent to the said body of revolution (12).

11. Device according to any one of Claims 1 to 10, comprising a plurality of systems (16) for dispensing a band (5).

12. Device according to any one of Claims 1 to 11, in which at least one system (16) for dispensing a band (5) comprises a device for heating the latter.

13. Device according to any one of Claims 1 to 12, characterized, furthermore, in that at least one dispensing system (16) is supported by at least one table (14) drivable in rotation about the axis of the body of revolution (12), but not in translation motion along this axis, and the said body of revolution is drivable in translational motion along its axis, but not in rotation about this axis.

14. Device according to any one of Claims 1 to 13, in which the band (5) is a COFIT.

15. Method for laying at least one band around a body of revolution by helical winding, characterized in that it employs a device according to any one of Claims 1 to 14.

## Patentansprüche

1. Vorrichtung zum spiralförmigen Aufwickeln Wenigstens eines Bandes (5) auf einen Rotationskörper (12), Wenigstens ein Zuliefersystem (16) des Bands (5) umfassend, wobei das Band (5) einen Vorspann (7) umfaßt, fähig an dem Rotationskörper (12) zu haften, wenn er gegen diesen gepreßt wird, und eine Starteinrichtung (20) der Aufwickeloperation, verbunden mit jedem Zuliefersystem (16) des Bands (5) und umfassend:
- zwei Losrollen bzw. frei drehbare Rollen (30 und 32), derart angeordnet, daß sie den von dem Zuliefersystem (16) austretenden Vorspann (7) des Bands (5) einklemmen können in einer von dem Rotationskörper (12) beabstandeten Klemmstellung, und
- Einrichtungen zum Verschieben der beiden den Vorspann (7) des Bands (5) einklemmenden Losrollen (30 und 32) aus der Klemstellung in eine Startstellung, in der diejenige der beiden Rollen, die sich in der Aufwickelrichtung des Bands (5) um den Rotationskörper (12) herum an erster Stelle befindet, gegen den Rotationskörper (12) gepreßt wird, und in der das Zuliefersystem (16) des Bands (5) und/oder der Rotationskörper (12) in Rotation um die Längsachse des Rotationskörpers (12) herum und/oder in Translation längs dieser Achse versetzt werden.

2. Vorrichtung nach Anspruch 1, dadurch gekennzeichnet, daß die beiden Losrollen (30 und 32) der Starteinrichtung (20) derart montiert sind, daß sie beabstandet werden können, um einen freien Durchgang für das aus dem Zuliefersystem (16) austretende Band (5) abzugrenzen.

3. Vorrichtung nach Anspruch 1 oder 2, dadurch gekennzeichnet, daß die Losrolle (30) der Starteinrichtung (20), die gegen den Rotationskörper (12) gepreßt wird, eine Rolle mit einer elastisch verformbaren Lauffläche ist.

4. Vorrichtung nach einem der Ansprüche 1 bis 3, dadurch gekennzeichnet, daß die zweite Losrolle (32) eine im wesentlichen steife Lauffläche hat.

5. Vorrichtung nach Anspruch 3 oder 4, dadurch gekennzeichnet, daß die Losrolle (30), die gegen den Rotationskörper (12) gepreßt wird, einen wesentlich größeren Durchmesser hat als die zweite Losrolle (32) der genannten Starteinrichtung (20).

6. Vorrichtung nach einem der Ansprüche 1 bis 5, dadurch gekennzeichnet,
- daß die Starteinrichtung (20) einen in Richtung Rotationskörper (12) verschiebbaren Halter (22) umfaßt,
- daß die zweite Losrolle (32) starr an dem Halter (22) befestigt ist; und
- daß die Losrolle (30), die dazu bestimmt ist, gegen den Rotationskörper (12) gepreßt zu werden, auf dem Halter (22) in Richtung zweite Losrolle (32) verschiebbar ist, wobei diese letztere als Anschlag für die auf dem Halter (22) verschiebbare Losrolle (30) dient.

7. Vorrichtung nach Anspruch 6, dadurch gekennzeichnet, daß der Halter (22) durch einen ersten Pneumatikzylinder (28) verschiebbar ist.

8. Vorrichtung nach Anspruch 6 oder 7, dadurch gekennzeichnet, daß die auf dem Halter (22) verschiebbare Losrolle (30) durch einen zweiten Pneumatikzylinder (34) getragen wird.

9. Vorrichtung nach einem der Ansprüche 1 bis 8, dadurch gekennzeichnet, daß die beiden den Vorspann (7) des Bands (5) einklemmenden Losrollen (30 und 32) in der Startstellung derart angeordnet sind, daß der Winkelabstand α zwischen dem Tangentenberührungspunkt (P₁), ab dem das Band (5) sich bei Fehlen der Starteinrichtung frei auf den Rotationskörper 12 aufwickeln würde, und dem Kontaktpunkt (P₀) der ersten Losrolle (30) mit dem Rotationskörper (12) zwischen 0° und 90° enthalten ist.

10. Vorrichtung nach einem der Ansprüche 1 bis 9, dadurch gekennzeichnet, daß die beiden den Vorlauf (7) des Bands (5) einklemmenden Losrollen (30 und 32) in der Startstellung derart angeordnet sind, daß dieser Vorlauf (7) im wesentlichen in einer den Rotationskörper (12) tangierenden Ebene (35) enthalten ist.

11. Vorrichtung nach einem der Ansprüche 1 bis 10, die mehrere Zuliefersysteme (16) eines Bands (5) umfaßt.

12. Vorrichtung nach einem der Ansprüche 1 bis 11, bei dem wenigstens ein Zuliefersystem (16) eines Bands (5) eine Heizeinrichtung für dieses umfaßt.

13. Vorrichtung nach einem der Ansprüche 1 bis 12, dadurch gekennzeichnet, daß wenigstens ein Zuliefersystem (16) durch wenigstens eine Platte (14) getragen wird, die um die Achse des Rotationskörpers (12) herum in Rotation versetzt werden kann aber nicht in Translation längs dieser Achse, und daß der Rotationskörper in Translation längs seiner Achse aber nicht in Rotation um diese Achse versetzt werden kann.

14. Vorrichtung nach einem der Ansprüche 1 bis 13, bei der das Band (5) ein COFIT bzw. COFIT-Band ist.

15. Verfahren zum spiralförmigen Aufwickeln wenigstens eines Bandes auf einen Rotationskörper, dadurch gekennzeichnet, daß eine Vorrichtung nach einem der Ansprüche 1 bis 14 benutzt wird.

## Revendications

1. Dispositif pour apposer par enroulement hélicoïdal au moins une bande (5) autour d'un corps de révolution (12), comprenant au moins un système de distribution (16) de bande (5), ladite bande (5) comprenant une amorce (7) apte à adhérer audit corps de révolution (12) lorsqu'elle est appliquée sur ce dernier, et un dispositif d'amorçage (20) de l'opération d'enroulement associé à chaque système de distribution (16) de bande (5) et comprenant
- deux rouleaux fous (30 et 32) agencés de façon à pouvoir pincer l'amorce (7) de la bande (5) sortant dudit système de distribution (16) dans une position de pinçage à l'écart dudit corps de révolution (12), et
- des moyens pour déplacer les deux rouleaux fous (30 et 32) pinçant l'amorce (7) de la bande (5) de la position de pinçage vers une position d'amorçage, dans laquelle celui des deux rouleaux qui est placé en première place, dans le sens d'enroulement de la bande (5) autour dudit corps de révolution (12), est appliqué contre ledit corps de révolution (12), et dans laquelle ledit système de distribution (16) de la bande (5) et/ou le corps de révolution (12) sont entraînés en rotation autour de l'axe longitudinal dudit corps de révolution (12) et/ou en translation le long de cet axe.

2. Dispositif selon la revendication 1, caractérisé en outre en ce que les deux rouleaux fous (30 et 32) du dispositif d'amorçage (20) sont montés de façon à ce qu'ils puissent être écartés pour définir un libre passage pour la bande (5) sortant du système de distribution (16).

3. Dispositif selon la revendication 1 ou 2, caractérisé en outre en ce que le rouleau fou (30) du dispositif d'amorçage (20) qui est appliqué contre le corps de révolution (12) est un rouleau à surface de roulement déformable élastiquement.

4. Dispositif selon l'une quelconque des revendications 1 à 3, caractérisé en outre en ce que le deuxième rouleau fou (32) a une surface de roulement sensiblement rigide.

5. Dispositif selon la revendication 3 ou 4, caractérisé en outre en ce que le rouleau fou (30) qui est appliqué contre ledit corps de révolution (12) a un diamètre sensiblement plus grand que le deuxième rouleau fou (32) dudit dispositif d'amorçage (20).

6. Dispositif selon l'une quelconque des revendications 1 à 5, caractérisé en outre
- en ce que le dispositif d'amorçage (20) comprend un support (22) déplaçable en direction du corps de révolution (12),
- en ce que le deuxième rouleau fou (32) est fixé rigidement sur ledit support (22), et
- en ce que le rouleau fou (30) qui est destiné à être appliqué contre le corps de révolution (12) est déplaçable sur ledit support (22) en direction du deuxième rouleau fou (32), ce dernier servant de butée au rouleau fou (30) déplaçable sur ledit support (22).

7. Dispositif selon la revendication 6, caractérisé en outre en ce que le support (22) est déplaçable par un premier vérin pneumatique (28).

8. Dispositif selon la revendication 6 ou 7, caractérisé en outre en ce que le rouleau fou (30) déplaçable sur le support (22) est porté par un deuxième vérin pneumatique (34).

9. Dispositif selon l'une quelconque des revendications 1 à 8, caractérisé en outre en ce que dans la position d'amorçage les deux rouleaux fous (30 et 32) pinçant l'amorce (7) de la bande (5) sont agencés de façon à ce que la distance angulaire α (5) entre le point de tangence (P₁), à partir duquel la bande (5) s'enroulerait librement sur le corps de révolution (12) en l'absence du dispositif d'amorçage, et le point de contact (P₀) du premier rouleau fou (30) avec le corps de révolution (12) soit comprise entre 0° et 90°.

10. Dispositif selon l'une quelconque des revendications 1 à 9, caractérisé en outre en ce que dans la position d'amorçage les deux rouleaux fous (30 et 32) pinçant l'amorce (7) de la bande (5) sont agencés de façon à ce que cette amorce (7) soit sensiblement contenue dans un plan (35) tangent audit corps de révolution (12).

11. Dispositif selon l'une quelconque des revendications 1 à 10, comprenant plusieurs systèmes de distribution (16) d'une bande (5).

12. Dispositif selon l'une quelconque des revendications 1 à 11, dans lequel au moins un système de distribution (16) d'une bande (5) comprend un dispositif de chauffage de celle-ci.

13. Dispositif selon l'une quelconque des revendications 1 à 12, caractérisé en outre en ce que au moins un système de distribution (16) est supporté par au moins un plateau (14) entraînable en rotation autour de l'axe du corps de révolution (12) mais pas en translation le long de cet axe, et ledit corps de révolution est entraînable en translation le long de son axe mais pas en rotation autour de cet axe.

14. Dispositif selon l'une quelconque des revendications 1 à 13, dans lequel la bande (5) est un COFIT.

15. Procédé pour l'apposition par enroulement hélicoïdal d'au moins une bande autour d'un corps de révolution, caractérisé en ce qu'il met en oeuvre un dispositif selon l'une quelconque des revendications 1 à 14.
